Europäisches Patentamt

European Patent Office

Office européen des brevets

(19)

(11) Numéro de publication: **0 157 693**
**B1**

(12) **FASCICULE DE BREVET EUROPEEN**

(45) Date de publication du fascicule du brevet:
**17.02.88**

(51) Int. Cl.⁴: **F 16 C 39/06**

(21) Numéro de dépôt: **85400548.5**

(22) Date de dépôt: **22.03.85**

(54) **Procédé et dispositif de réduction des vibrations des machines tournantes equipées d'une suspension magnétique active.**

(30) Priorité: **26.03.84 FR 8404649**

(43) Date de publication de la demande:
**09.10.85 Bulletin 85/41**

(45) Mention de la délivrance du brevet:
**17.02.88 Bulletin 88/7**

(84) Etats contractants désignés:
**CH DE GB IT LI SE**

(56) Documents cités:
**FR - A - 2 379 732**

(73) Titulaire: **SOCIETE EUROPEENNE DE PROPULSION (S.E.P.) Société Anonyme dite:, 3, avenue du Général de Gaulle, F-92800 Puteaux (FR)**

(72) Inventeur: **Habermann, Helmut, 63, rue de Bizy, F-27200 Vernon (FR)**
Inventeur: **Brunet, Maurice, Le bout aux Roussel Ste Colombe, F-27950 St Marcel (FR)**
Inventeur: **Tassel, André, 5 Résidence des Merisiers Bois Jérôme St Ouen, F-27620 Gasny (FR)**

(74) Mandataire: **Thevenet, Jean-Bruno et al, Cabinet BEAU DE LOMENIE 55 rue d'Amsterdam, F-75008 Paris (FR)**

# Description

La présente invention a pour objet un dispositif de réduction des vibrations d'une machine tournante dont le rotor est monté sur un bâti à l'aide d'une suspension magnétique active comprenant au moins un palier magnétique radial muni d'enroulements d'électro-aimants, au moins un détecteur radial de la position du rotor et un circuit d'asservissement relié audit détecteur et auxdits enroulements.

On a constaté que dans les machines tournantes, des vibrations engendrant du bruit sont souvent transmises au bâti sans transiter par les paliers de support. C'est le cas notamment lorsqu'il existe des forces aérodynamiques liées par exemple à des aubes de turbine our lorsqu'un moteur électrique porté par le rotor engendre, par la rotation de son champ magnétique, des perturbations sur le bâti. Les vibrations engendrées dans le bâti peuvent avoir une fréquence qui est directement liée à la vitesse de rotation du rotor.

C'est le cas des vibrations provoquées par le balourd à la fréquence de rotation même du rotor, qui proviennent du non-alignement des axes d'inertie du rotor et des axes géométriques des paliers. C'est également le cas des vibrations provoquées par l'interaction aérodynamique entre le stator et le rotor dans les soufflantes et compresseurs. La fréquence des vibrations est alors représentée normalement par quelques multiples de la fréquence de rotation du rotor bien définis par la géométrie du stator et du rotor.

Les vibrations engendrées dans le bâti peuvent toutefois ne pas être synchrones avec la rotation du rotor, mais représenter des multiples d'autres fréquences comme la fréquence d'alimentation d'un moteur électrique asynchrone. De telles vibrations peuvent être provoquées par exemple par des irrégularités géométriques de la cage d'écureuil du rotor ou encore par la présence d'un champ tournant non sinusoïdal.

Le bâti peut enfin être soumis à d'autres perturbations d'origine extérieure à des fréquences stables dans le temps et bien caractérisables, mais non synchrones à la vitesse de rotation du rotor ou au champ tournant du moteur électrique associé au rotor.

Il a déjà été proposé, pour des machines tournantes équipées d'une suspension magnétique active, de réduire les effets nuisibles dus à des perturbations parasites ayant notamment comme origine l'existence d'un balourd sur le rotor, en créant une chute brutale du gain du circuit d'asservissement des paliers magnétiques dans une bande très étroite de fréquence fonction directe de la vitesse de rotation du rotor. Ceci permet de réaliser un équilibrage automatique du rotor en faisant coïncider son axe de rotation avec son axe d'inertie. Un tel type d'asservissement est décrit dans FR-A-2 336 602.

Dans certains cas, un tel système d'équilibrage automatique s'avère insuffisant pour empêcher de façon sûre que des vibrations liées à la rotation du rotor soient transmises au bâti, notamment pour des fréquences inférieures à la fréquence propre de l'asservissement. De plus, un tel système d'équilibrage automatique ne prend pas en compte les perturbations non synchrones à la rotation du rotor.

On a également déjà proposé d'asservir en position un solide suspendu à l'aide de paliers magnétiques actifs, à l'aide d'un signal obtenu par double intégration à partir du signal de sortie d'un accéléromètre. Un tel type d'asservissement à large bande permet de prendre en compte des vibrations aléatoires mais ne présente une stabilité suffisante qu'avec un gain de boucle limité. Un tel type d'asservissement, décrit dans FR-A-2 379 732, s'avère par conséquent impropre à la stabilisation d'un bâti de machine tournante soumis à des perturbations répétitives pouvant être de grande amplitude, bien que correspondant à des fréquences de vibration relativement peu nombreuses.

La présente invention a précisément pour objet de stabiliser un bâti de machine tournante et d'empêcher que des vibrations répétitives engendrées par des éléments liés au rotor de la machine tournante ou à d'autres de référence soient transmises au bâti.

Ces buts sont atteints grâce à un dispositif qui comprend au moins deux détecteurs de vibration à axes non parallèles perpendiculaires à l'axe du rotor et disposés sur le bâti de la machine pour détecter des perturbations auxquelles est soumis le bâti, et une chaîne supplémentaire de contre-réaction sélective à bande étroite et à grand gain dont la fréquence centrale est synchronisée avec une fréquence de référence, et à laquelle sont appliqués les signaux émis par lesdits détecteurs de vibration, la chaîne supplémentaire de contre-réaction sélective à bande étroite comprenant des moyens pour intégrer les signaux issus des détecteurs de vibration, et des moyens de filtrage pour supprimer les signaux transitoires dont la fréquence n'est pas liée à la fréquence de référence.

Selon un mode de réalisation, les détecteurs de vibration sont des accéléromètres et les moyens d'intégration opèrent une double intégration des signaux émis par les accéléromètres.

Selon un autre mode de réalisation, les détecteurs de vibration sont des capteurs de vitesse et les moyens d'intégration opèrent une simple intégration des signaux émis par les capteurs de vitesse.

De façon plus particulière, la chaîne supplémentaire de contre-réaction sélective à bande étroite comprend un premier circuit de transformation du type susceptible d'effectuer une transformation de coordonnées d'un repère fixe constitué par les axes de référence des détecteurs de vibration perpendiculaires entre eux et à l'axe de rotation prédéterminé du rotor dans un repère tournant qui est constitué par deux axes mobiles, perpendiculaire entre eux et à l'axe de rotation du rotor et tournant à une vitesse liée à ladite fréquence de référence, et un second circuit de transformation du type susceptible d'effectuer une transformation de coordonnées dudit repère tournant dans ledit repère fixe.

L'invention permet de compenser, simultanément ou alternativement à l'aide d'une ou plusieurs chaînes supplémentaires de contre-réaction, des perturbations d'origines diverses.

Selon une première possibilité, la fréquence de référence est un multiple de la vitesse de rotation du rotor et un circuit susceptible de délivrer un signal représentatif d'un multiple de la vitesse de rotation du rotor, est relié auxdits premier et second circuits de transformation.

Selon une autre possibilité, la fréquence de référence est une fréquence liée à la fréquence d'alimentation d'un moteur électrique asynchrone associé au rotor, et un circuit est relié auxdits premier et second circuits de transformation et adapté pour appliquer un signal de fréquence de référence dérivé du signal d'alimentation du moteur électrique.

Selon encore une autre possibilité, la fréquence de référence est une fréquence stable dans le temps décelée par analyse de Fourier et indépendante de la vitesse de rotation du rotor et un oscillateur à fréquence ajustable est relié auxdits premier et second circuits de transformation pour appliquer un signal de référence à une fréquence la plus proche possible de ladite fréquence de référence.

Suivant un mode de réalisation particulier les circuits de transformation de coordonnés sont de type analogique et comprennent chacun un générateur sinus-cosinus et un résolveur statique constitué à base de multiplieurs analogiques.

Afin de permettre une compensation de perturbations dont le vecteur représentatif ne présente pas une amplitude constante, selon une caractéristique particulière de l'invention, la chaîne supplémentaire de contre-réaction sélective à bande étroite comprend un premier circuit de transformation comprenant un résolveur d'entrée unique et un second circuit de transformation incluant une première fonction de transfert et un premier résolveur de sortie correspondant à l'un des axes dudit repère fixe, et une seconde fonction de transfert et un second résolveur de sortie correspondant à l'autre axe dudit repère fixe.

Dans tous les cas, les circuits de transformation de coordonnées peuvent aussi être constitués par des circuits numériques.

L'invention a encore pour objet un procédé de réduction des vibrations d'une machine tournante dont le rotor est monté sur un bâti à l'aide d'une suspension magnétique active comprenant au moins un palier magnétique radial muni d'enroulements d'électro-aimants, au moins un détecteur radial de la position du rotor et un circuit d'asservissement relié audit détecteur et auxdits enroulements, caractérisé en ce que l'on dispose sur le bâti de la machine tournante au moins deux détecteurs de vibrations à axes non parallèles perpendiculaires à l'axe zz' du rotor, en ce que l'on procède, à l'aide d'un analyseur de spectre à partir des signaux fournis par les détecteurs de vibration, au recensement des fréquences de vibration correspondant à des perturbations répétitives stables dans le temps, en ce que l'on identifie les fréquences de vibration correspondant à un multiple de la vitesse de rotation du rotor, les fréquences de vibration correspondant à un multiple d'une fréquence caractéristique connue telle que la fréquence d'alimentation d'un moteur asynchrone et les fréquences de vibration stables dans le temps mais non synchrones à une fréquence caractéristique connue d'un organe de machine, en ce que l'on introduit dans le circuit d'asservissement, pour compenser les vibrations répétitives correspondant aux fréquences de vibration recensées, des boucles supplémentaires de contre-réaction sélective à bande étroite et à grand gain dont les fréquences centrales sont synchronisées respectivement avec les différentes fréquences de vibration recensées, en ce que l'on applique, les signaux émis par lesdits détecteurs de vibration, après intégration, aux différentes boucles supplémentaires de contre-réaction et en ce que l'on procède à l'intérieur de chaque boucle de contre-réaction supplémentaire à un filtrage des signaux transitoires dont la fréquence n'est pas liée à la fréquence de vibration recencée devant être compensée par ladite boucle.

Avantageusement, on recense d'abord dans une première étape, à l'aide d'un analyseur de spectre, de premières fréquences de vibration correspondant à des multiples de la vitesse de rotation du rotor ou le cas échéant à des multiples d'une fréquence caractéristique connue, et on introduit dans le circuit d'asservissement des premières boucles supplémentaires de contre-réaction sélective à bande étroite et à grand gain dont les fréquences centrales sont synchronisées respectivement avec les différentes premières fréquences de vibration recencées pendant la première étape, à partir de signaux fournis par un capteur de vitesse de rotation du rotor ou par un capteur du signal de fréquence caractéristique connue, puis, dans une deuxième étape, les premières boucles supplémentaires de contre-réaction étant en service, on recense, à l'aide de l'analyseur de spectre, de secondes fréquences de vibration stables dans le temps non synchrones à une fréquence caractéristique connue d'un organe de machine, et on introduit dans le circuit d'asservissement de secondes boucles supplémentaires de contre-réaction sélective à bande étroite et à grand gain dont les fréquences centrales sont synchronisées respectivement avec les différentes secondes fréquences de vibration recensées pendant la deuxième étape, à partir d'oscillateurs à fréquence ajustable dont les fréquences sont ajustées sur lesdites secondes fréquences de vibration recensées.

Il est possible d'effectuer périodiquement à l'aide de l'analyseur de spectre, un contrôle des fréquences des vibrations stables dans le temps non synchrones à une fréquence caractéristique connue d'un organe de machine et de réajuster après chaque contrôle les fréquences des oscillateurs à fréquence ajustable en fonction des valeurs actualisées des secondes fréquences de vibration recensées.

De préférence, lors du recensement des fréquences de vibration, on ne tient pas compte des fréquences correspondant à des vibrations d'amplitude inférieure à un seuil prédéterminé.

On notera qu'en procédant par analyse de Fourier, il est possible de prendre en compte toutes les perturbations répétitives auxquelles est soumis le bâti et de décomposer chacune des perturbations en un ensemble de fréquences de vibrations sinusoïdales.

D'autres caractéristiques et avantages de la présente invention ressortiront de la description qui fait suite d'un mode particulier de réalisation, donné à titre d'exemple, en référence aux dessins annexés, sur lesquels:

la figure 1 est une vue en demi-coupe axiale d'un montage de rotor dans des paliers magnétiques radiaux, montrant la localisation de détecteurs de position et de détecteurs de vibration,

la figure 2 est une vue en coupe suivant la ligne II-II de la figure 1,

la figure 3 est une vue en coupe suivant la ligne III-III de la figure 1, et

les figures 4 et 5 sont des vues schématiques de circuits d'asservissement assurant une réduction des vibrations conformément à l'invention, et

la figure 6 est un graphique montrant un exemple de spectre de fréquences de vibrations pouvant être compensées selon l'invention.

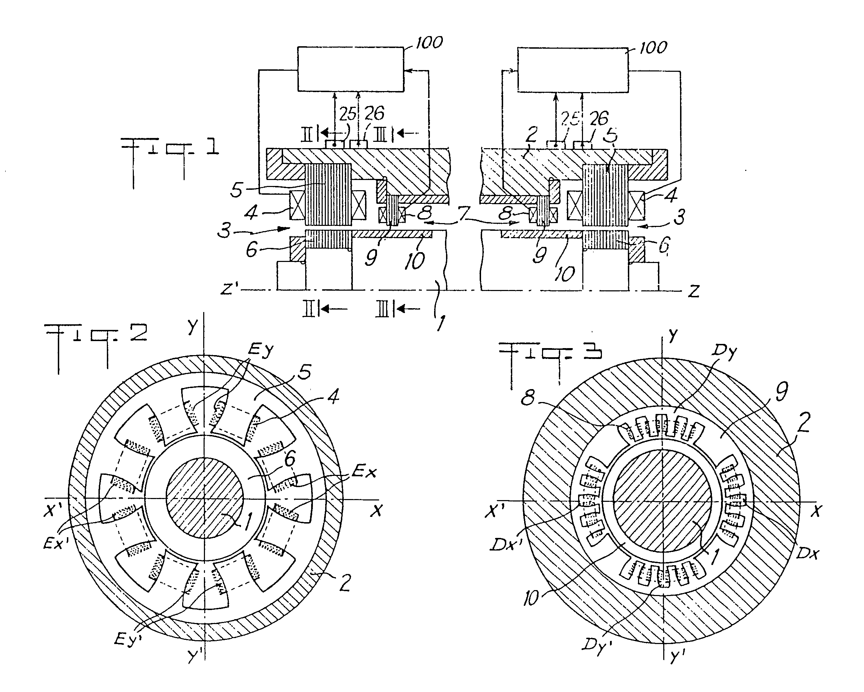

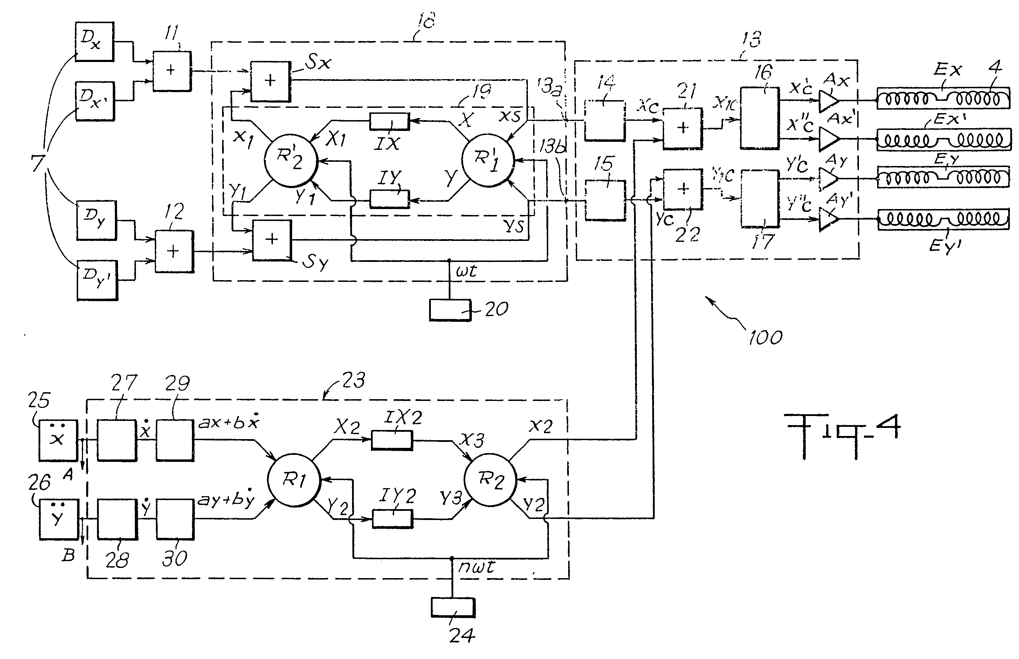

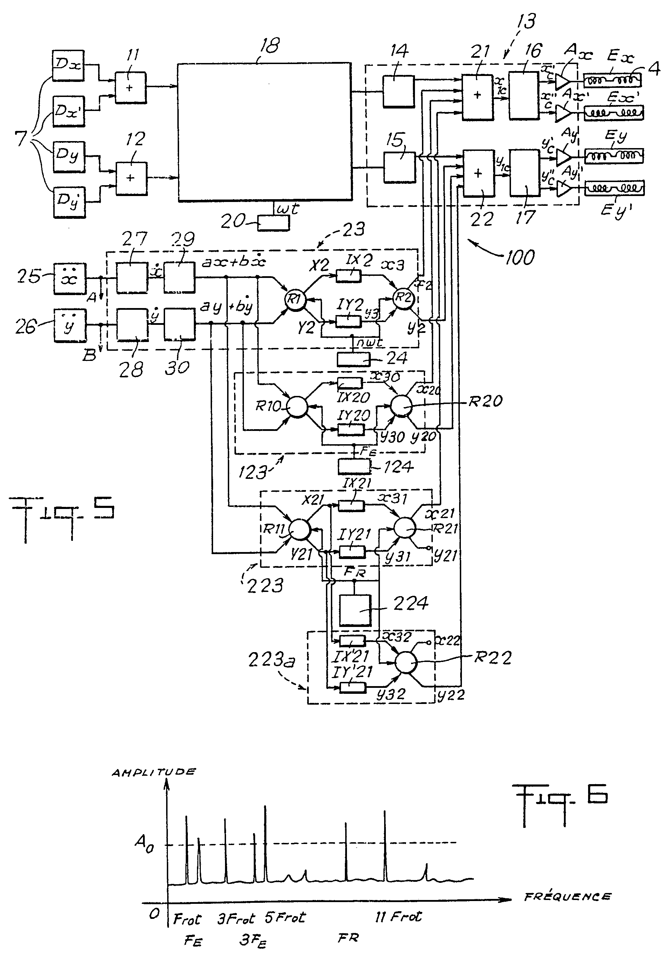

On a représenté sur les figures 1 à 3, un rotor 1 supporté dans un stator 2 au moyen de deux paliers magnétiques radiaux 3. Chaque palier comporte des enroulements d'électro-aimants 4 montés sur une armature fixe 5 coopérant avec une armature annulaire 6 solidaire du rotor 1.

Les électro-aimants sont disposées par paires Ex, Ex', Ey, Ey', suivant deux axes diamétraux orthogonaux fixes, respectivement x'x et y'y, perpendiculaires à l'axe de rotation z'z prédéterminé défini par le palier, les deux électro-aimants d'une même paire étant diamétralement opposés et exerçant chacun une action attractive sur le rotor lorsque les enroulements sont alimentés. Dans l'exemple illustré, chaque électro-aimant comporte deux enroulements 4 connectés en série.

Chaque palier est associé à un dispositif de détection radial 7 comportant deux paires de détecteurs Dx, Dx' et Dy, Dy' disposés suivant deux axes fixes respectivement parallèles à x'x et y'y, les deux détecteurs d'une même paire étant diamétralement opposés. Dans l'exemple illustré, chaque détecteur est constitué par plusieurs bobinages 8 montés sur une armature fixe 9 coopérant avec une armature annulaire 10 solidaire du rotor 1. Bien entendu, d'autres types de détecteurs peuvent être utilisés, en particulier des détecteurs du type capacitif ou optique.

Le rotor 1 peut être entraîné au moyen d'un moteur électrique (non représenté) ayant son stator solidaire du stator 2 et son rotor solidaire du rotor 1.

Il est connu d'asservir chaque palier à partir des signaux des détecteurs au moyen d'un circuit comportant des additionneurs tels que 11 et 12 (figure 4) sommant les signaux de chaque paire de détecteurs et délivrant sur leurs sorties respectives des signaux x et y représentatifs de l'écart entre les positions radiales réelle et prédéterminée de l'axe de rotation du rotor, respectivement suivant les axes x'x et y'y.

Dans un circuit d'asservissement connu, les signaux x et y sont appliqués respectivement aux entrées 13a et 13b d'un circuit de commande 13 qui fournit en sortie les courants d'alimentation respectifs des électro-aimants Ex, Ex', Ey et Ey'. Un tel circuit de commande comporte par exemple des réseaux d'avance de phase 14, 15 qui fournissent des signaux de commande $x_c$, $y_c$. Ces signaux de commande sont déphasés au moyen de déphaseurs 16, 17 pour élaborer des signaux $x'_c$, $x''_c$ et $y'_c$, $y''_c$ qui, amplifiés, au moyen d'amplificateurs Ax, Ax', Ay, Ay' alimentent les électro-aimants Ex, Ex', Ey et Ey' avec la polarité convenable. Plusieurs modes particuliers de réalisation de circuits de commande sont connus, par exemple de FR-A-2 149 644.

Conformément à l'invention, des détecteurs de vibrations 25, 26 sont disposés directement sur le bâti 2 de la machine, par exemple au voisinage de chacun des paliers magnétiques radiaux 3, comme représenté sur la figure 1. Toutefois, ces détecteurs de vibration 25, 26 peuvent également être délocalisés et situés sur le bâti de la machine à une certaine distance des paliers magnétiques. Les détecteurs de vibration 25, 26 sont placés de manière à détecter des vibrations selon deux directions perpendiculaires entre elles représentées par un point et une flèche sur la figure 1, perpendiculaires à l'axe de rotation ZZ' du rotor 1, et bien définies par rapport à la position des enroulements d'électro-aimants 4.

Les détecteurs de vibration 25, 26 peuvent être des accéléromètres ou, selon une variante, des détecteurs de vitesse de déplacement. Comme on peut le voir sur la figure 4, les signaux fournis par les détecteurs de vibration 25, 26 sont appliqués à au moins une chaîne supplémentaire 23 de contre-réaction sélective à bande étroite et à grand gain qui est associée au circuit d'asservissement 100 et fournit des signaux de correction $x_2$, $y_2$ qui sont additionnés dans des additionneurs 21, 22 aux signaux de commande $x_c$, $y_c$ issus des réseaux d'avance de phase 14, 15 associés à l'asservissement classique à partir des détecteurs de position 7. Les signaux de commande $x_1c$, $y_1c$ appliqués aux circuits déphaseurs 16, 17 tiennent ainsi compte à la fois des informations fournis par les détecteurs Dx, Dx', Dy, Dy' de la position radiale du rotor, c'est-à-dire des déplacements radiaux du rotor 1 par rapport à sa position de référence, et des signaux fournis par les détecteurs 25, 26, c'est-à-dire des vibrations auxquelles est soumis le bâti 2. Toutefois, la chaîne de contre-réaction 23 comprend des moyens de filtrage pour supprimer les signaux transitoires dont la fréquence n'est pas liée à une fréquence de référence qui sur le schéma de la figure 4 est constituée par un multiple nwt de la vitesse de rotation du rotor.

Ainsi, grâce aux détecteurs de vibration 25, 26 placés sur le bâti, à la chaîne supplémentaire de contre-réaction 23 et aux additionneurs 21, 22 intégrés dans un simple circuit d'asservissement classique composé des éléments 11, 12, 14, 15, 16, 17 et recevant les signaux de sortie du détecteur de position radiale 7, il est possible avec le circuit d'asservissement 100 de la figure 4 de réduire et même de supprimer toute vibration du stator liée à la rotation du rotor, et par suite de réduire considérablement le bruit provoqué par le fonctionnement de la machine tournante.

Jusqu'à présent, les moyens prévus pour réduire les perturbations parasites créées par la rotation du rotor, notamment du fait du balourd de celui-ci, comprenaient simplement un circuit de traitement tel que le circuit de traitement 18 représenté sur la figure 4 et décrit dans FR-A-2 336 602. Un tel circuit de traitement agit directement sur les signaux fournis par le détecteur de position radiale 7 pour créer au sein du circuit d'asservissement un «trou» de gain centré sur une fréquence fonction directe de la vitesse de rotation du rotor, de manière à permettre de s'affranchir notamment des perturbations liées au balourd en laissant le rotor libre de tourner autour de son axe d'inertie pour une bande étroite de fréquence.

Un tel type de compensation des perturbations synchrones liées à la vitesse de rotation du rotor ne peut toutefois pas toujours être effectué pour de grosses machines tournantes, ou l'effet obtenu est insuffisant pour supprimer totalement les vibrations du bâti, notamment celles qui correspondant à des fréquences de référence qui ne sont pas des fréquences directement liées à la vitesse de rotation du rotor. C'est pourquoi, selon la présente invention, pour une série de fréquences déterminées, on réalise à l'aide d'une série de boucles de contre-réaction 23, 123, 223 (fig. 5) un asservissement accélérométrique de position à partir de détecteurs de vibration disposés sur le bâti de la machine et non liés à la partie tournante de la machine.

L'invention s'applique ainsi particulièrement aux grosses machines tournantes lentes, notamment aux machines à axe horizontal, susceptibles de créer sur le stator des perturbations liées au rotor, soit du fait de forces aérodynamiques, soit du fait de la présence d'un moteur électrique d'entraînement monté sur le rotor.

Sur la figure 4, la chaîne supplémentaire de contre-réaction 23 produit une pointe de gain dans une bande étroite de fréquences prédéterminée afin de réaliser un asservissement de zéro de vibration à partir des informations fournies par les détecteurs 25, 26.

Les détecteurs de vibrations placés sur le bâti 2, délivrent des signaux de sortie qui dans un premier temps ont d'abord servi à alimenter, par les lignes A et B, un analyseur de spectre, de type connu en soi, non représenté au dessin, permettant de déterminer le spectre de vibrations provoquées par exemple par les forces aérodynamiques liées à la rotation du rotor. Les vibrations répétitives détectées ont été décomposées en une série d'harmoniques par analyse de Fourier, tandis que les perturbations aléatoires n'ont pas été prises en compte. La réinjection, dans l'asservissement des enroulements d'électro-aimants, grâce à des chaînes de contre-réaction telle que la chaîne 23, du spectre des fréquences de perturbations répétitives constatées conduit à faire tourner le rotor sur un axe modifié par rapport à l'axe défini par les paliers radiaux. Le rotor 1 se conduit ainsi comme un balancier qui se déplace, grâce à la contre-réaction supplémentaire, de manière à compenser les perturbations du stator. La commande des mouvements de déplacement du rotor est effectuée pour chaque chaîne de contre-réaction telle que 23 grâce à un repère tournant à une fréquence multiple de la fréquence de rotation du rotor. Pour d'autres chaînes de contre-réaction, telles que les chaînes 123, 223 de la figure 5, la commande des mouvements de déplacement du rotor peut cependant être effectuée grâce à un repère tournant à une fréquence de référence prédéterminée autre qu'une fréquence multiple de la fréquence de rotation du rotor, comme cela sera explicité plus loin. Ceci permet un amortissement efficace de toutes les vibrations répétitives, même pour des machines à bâti à raideur limitée.

Si l'on se reporte à la figure 4, on voit des détecteurs de vibration 25, 26 qui peuvent être constitués par des accéléromètres délivrant des signaux $\ddot{x}$ et $\ddot{y}$. Ces signaux sont intégrés une première fois dans des circuits intégrateurs 27, 28 respectivement, puis une seconde fois dans de seconds circuits intégrateurs 29, 30. De la sorte, il est créé des signaux représentant les déplacements du stator causés par les vibrations. Les seconds circuits intégrateurs 29, 30 peuvent n'agir que partiellement sur les signaux issus des premiers circuits intégrateurs 27, 28 afin de fournir des signaux de la forme $ax + b\dot{x}$ ou $ay + b\dot{y}$ comprenant une composante de vitesse créant un amortissement, a et b étant des constantes.

Selon un autre mode de réalisation possible, les détecteurs 25, 26 sont constitués par des capteurs de vitesse et fournissent directement des signaux pouvant être appliqués aux circuits intégrateurs simples 29, 30 qui réaliseront une intégration totale ou partielle. Dans ce cas, les premiers circuits intégrateurs 27, 28 sont supprimés.

La boucle de contre-réaction 23 comprend un premier circuit de transformation de coordonnées, ou résolveur R1, dont une première entrée reçoit le signal de la forme $ax + b\dot{x}$ fourni par le circuit intégrateur 29 et une deuxième entrée reçoit le signal de la forme $ay + b\dot{y}$ fourni par le circuit intégrateur 30.

Le résolveur R1 délivre sur ses deux sorties des signaux $X_2$ et $Y_2$ tels que:

$$\begin{cases} X_2 = (ax+b\dot{x}) \cos nwt + (ay+b\dot{y}) \sin nwt \\ Y_2 = -(ax+b\dot{x}) \sin nwt + (ay+b\dot{y}) \cos nwt \end{cases}$$

w étant égal à la vitesse angulaire du rotor, t représentant le temps et n étant un nombre entier.

Le résolveur R1 effectue donc une transformation de coordonnées du repère fixe constitué par les axes x'x et y'y des détecteurs de vibration 25, 26, qui correspondent également aux axes des détecteurs de position radiale 7, dans un repère tournant par rapport au repère fixe à une vitesse angulaire nwt.

Les signaux $X_2$ et $Y_2$ sont intégrés par deux intégrateurs $IX_2$ et $IY_2$ qui délivrent en sortie des signaux $X_3$ et $Y_3$, respectivement. Ces signaux $X_3$ et $Y_3$ sont appliqués respectivement à une première et à une deuxième entrée d'un second circuit de transformation de coordonnées, ou résolveur, R2, qui effectue une transformation inverse de celle effectuée par le résolveur R1 et qui délivre donc sur ses sorties des signaux respectifs $x_2$ et $y_2$ tels que:

$$\begin{cases} x_2 = X_3 \cos nwt - Y_3 \sin nwt \\ y_2 = X_3 \sin nwt + Y_3 \cos nwt \end{cases}$$

Comme indiqué précédemment, un additionneur 21 reçoit sur une première entrée le signal $x_c$ délivré par le circuit correcteur 14 de la boucle principale d'asservissement et sur une seconde entrée le signal $x_2$ délivré par la boucle de contre-réaction 23. De façon similaire, l'additionneur 22 reçoit sur une première entrée le signal $y_c$ délivré par le circuit correcteur 15 de la boucle principale d'asservissement et sur une seconde entrée le signal $y_2$ délivré par la seconde boucle de contre-réaction 23. Les signaux $x_{1c}$ et $y_{1c}$ délivrés par les circuits additionneurs 21, 22 sont transmis respectivement au déphaseur 16 et au déphaseur 17 pour l'élaboration des signaux $x'_c$, $x''_c$, $y'_c$, $y''_c$.

Les résolveurs R1 et R2 reçoivent chacun sur une troisième entrée un signal n w t correspondant à la fréquence multiple de la vitesse de rotation du moteur à laquelle se produisent les perturbations parasites.

Les circuits résolveurs R1 et R2 qui effectuent une transformation de coordonnées entre un repère fixe et un repère tournant peuvent présenter une constitution connue en soi et être par exemple de type analogique et réalisés à partir de circuits multiplieurs analogiques et d'amplificateurs opérationnels coopérant avec un générateur de sinus/cosinus auquel est appliqué le signal n w t fourni par le circuit 24. Toutefois, les résolveurs R1 et R2 peuvent également être réalisés sous forme numérique, les signaux $ax + b\dot{x}$ et $ay + b\dot{y}$ étant convertis sous forme numérique avant d'être appliqués au résolveur R1 et les signaux $x_2$ et $y_2$ étant convertis sous forme analogique en sortie du circuit 23.

La fonction de transfert T de la boucle supplémentaire de contre-réaction 23 est déterminée de telle manière que pour la fonction de transfert globale du circuit d'asservissement, il se présente une amplification sélective de gain, très supérieure au gain interne de la boucle principale de l'asservissement, pour une bande de fréquence centrée sur une fréquence constamment asservie à un multiple n w t de la vitesse de rotation du rotor.

La largeur de cette bande de fréquence est de préférence très limitée et peut être par exemple de l'ordre de 1 Hz, afin que la boucle de contre-réaction 23 n'agisse que pour des perturbations répétitives prédéterminées. La bande passante $\triangle/f$ des intégrateurs $IX_2$ et $IY_2$ est donc limitée aux très basses fréquences, de l'ordre de 1 Hz ou d'une fraction de hertz. Les intégrateurs $IX_2$ et $IY_2$ ont de préférence un gain ajustable, par exemple à l'aide de potentiomètres, afin de permettre un réglage de l'augmentation localisée du gain de la fonction de transfert globale de l'asservissement.

La présente invention permet ainsi par des augmentations sélectives de gain du circuit d'asservissement pour des bandes étroites de fréquences centrées sur des fréquences prédéterminées de compenser efficacement par une action sur le rotor, des perturbations induites sur le stator par des forces différentielles agissant par exemple à des fréquences multiples de la vitesse de rotation du rotor, mais ne transitant pas par les paliers c'est-à-dire n'étant pas prises en compte par les détecteurs de position, du fait de déplacements communs du rotor et du stator, contrairement par exemple à la force inertielle due au balourd qui peut être prise en compte par des détecteurs de position radiale et compensée par un circuit tel que le circuit d'équilibrage automatique 18, décrit dans le FR-A-2 336 602, et représenté sur la figure 4, qui réalise un filtrage des signaux d'erreur parasites engendrés par le balourd associé au rotor 1 sans détection au niveau du bâti 2 de la machine.

On notera que la présente invention permet, grâce à la chaîne de contre-réaction supplémentaire 23, de s'affranchir éventuellement de la nécessité d'utiliser un circuit d'équilibrage automatique 18 dans la boucle principale d'asservissement, et donc de réaliser un «trou» de gain dans une bande étroite de fréquence centrée sur la vitesse de rotation du rotor.

Toutefois, comme représenté sur la figure 4, la mise en oeuvre d'une boucle de contre-réaction supplémentaire 23 n'est pas incompatible avec celle d'un circuit d'équilibrage automatique 18 intégré à la boucle principale d'asservissement. Ainsi, on voit sur la figure 4, au sein du circuit de traitement 18, deux additionneurs $S_x$ et $S_y$ à deux entrées présentant des premières entrées connectées respectivement aux sorties des additionneurs 11 et 12 et des sorties connectées respectivement aux entrées 13a et 13b du circuit de commande 13, et délivrant respectivement des signaux $x_s$ et $y_s$. Un circuit de contre-réaction 19 comprenant un premier résolveur $R'_1$, des intégrateurs IX et IY et un second résolveur $R'_2$, est branché entre les sorties des additionneurs Sx et Sy et leurs secondes entrées. Les résolveurs $R'_1$ et $R'_2$ reçoivent chacun sur une troisième entrée un signal wt délivré par un convertisseur tachymétrique 20 qui élabore une grandeur proportionnelle à la vitesse de rotation réelle du rotor. Ce circuit 18 permet ainsi de constituer pour les signaux émis par le détecteur 7 un filtre coupe-bande dans une bande étroite de fréquence centrée sur une fréquence en permanence égale à la vitesse de rotation du rotor, ce qui revient à éliminer la raideur du palier pour cette bande de fréquence.

Comme dans FR-A-2 336 602, le circuit de contre-réaction 19 peut être utilisé pour réduire divers types de perturbations parasites liées à la vitesse de rotation du rotor, et non seulement les perturbations dues à l'existence d'un balourd. Toutefois, ce circuit 19 ne permet pas de supprimer totalement toutes les perturbations parasites conduisant à faire vibrer le bâti. Au contraire, selon la présente invention, grâce aux détecteurs de vibration 25, 26 placés directement sur le bâti, il est possible d'éliminer efficacement les perturbations parasites résiduelles qui n'auraient pu être supprimées par le seul circuit 19 de la boucle principale d'asservissement. Comme cela a été indiqué précédemment, les perturbations parasites liées à la vitesse de rotation du rotor sont décomposables en harmoniques de la fréquence de base égale à la vitesse de rotation du rotor. Ainsi, il est possible d'utiliser plusieurs boucles de contre-réaction analogues à la boucle 23, chaque boucle étant associée à une fréquence particulière fournie par un circuit analogue au circuit 24. Dans ce cas, les circuits intégrateurs 27 à 30 peuvent cependant être communs à plusieurs boucles 23.

En particulier, comme cela sera explicité maintenant en référence à la figure 5, il est également possible de mettre en oeuvre des boucles de contre-réaction 123, 223 analogues à la boucle 23, mais prévues pour compenser des fréquences non directement liées à la vitesse de rotation du rotor.

Ainsi, dans le cas de perturbations créées par un moteur électrique asynchrone lié au rotor, les perturbations sont produites avec une fréquence correspondant à la rotation du champ magnétique de ce moteur, c'est-à-dire à une fréquence multiple de la fréquence d'alimentation du moteur, cette dernière pouvant être de l'ordre de 50 ou 60 Hz. Dans ce cas, le signal $F_E$ appliqué par le circuit 124 à la boucle 123, peut être dérivé directement du moteur électrique créant les perturbations, par exemple à partir de la fréquence d'excitation du moteur.

Dans le cas de perturbations dues aux effets aérodynamiques d'un ventilateur ou d'une pompe liés au rotor, la fréquence des perturbations 3Frot, 5Frot ou 11Frot par exemple est très supérieure à la vitesse de rotation du rotor, mais toujours un multiple de celle-ci. Il est alors utilisé une boucle de contre-réaction telle que la boucle 23 des figures 4 et 5 et le circuit 24 fournit directement un signal correspondant à la fréquence de l'une des perturbations synchrones que l'on souhaite supprimer, et qui ont été au préalable déterminées par analyse de Fourier. Un filtrage du circuit 23 déterminant une bande passante réduite autour des fréquences de vibrations à supprimer peut ainsi être réalisé en appliquant à l'aide du circuit 24 soit un signal correspondant à la fréquence fondamentale des perturbations, soit un signal correspondant à des harmoniques, en fonction des résultats de l'analyse spectrale réalisée au préalable pour une machine tournante déterminée.

Comme cela a été déjà indiqué plus haut, selon l'invention, des boucles de contre-réaction à grand gain et bande passante étroite 223, 223a peuvent être insérées dans le circuit d'asservissement 100 pour compenser des perturbations à des fréquences de référence $F_R$ bien déterminées stables dans le temps mais non liées directement à la rotation du rotor, ou à un organe de machine bien identifiable tel qu'un moteur électrique. Dans le cas de telles perturbations répétitives bien identifiables mais de source inconnue, il est possible d'utiliser des boucles de contre-réaction analogues aux boucles 23 ou 123, mais l'application d'une fréquence de référence $F_R$ à la boucle de compensation 223 est alors effectuée à partir d'un oscillateur 224 à fréquence ajustable réglé sur la fréquence $F_R$, et non plus à partir d'un signal dérivé directement de l'organe engendrant la perturbation comme dans le cas des circuits 24, 124.

Les circuits de contre-réaction 23, 123, 223 représentés sur la figure 5, sont tout à fait semblables entre eux, bien qu'étant destinés à compenser des perturbations d'origines différentes. Ainsi, les boucles 23, 123, 223 sont toutes alimentées à partir des signaux délivrés par les capteurs de vibration 25, 26. Comme on le voit sur la figure 5, les circuits intégrateurs 27 à 30 peuvent d'ailleurs être communs à l'ensemble des boucles de compensation 23, 123, 223.

Chaque boucle de compensation 23, 123, 223 comprend un premier résolveur d'entrée R1, R10, R11 et au moins un résolveur de sortie R2, R20, R21, R22. Pour chaque boucle 23, 123, 223 les résolveurs d'entrée et de sortie reçoivent un même signal nwt, $F_E$, $F_R$ respectivement produit par les circuits 24, 124, 224 respectivement et représentant la fréquence de la perturbation à réduire par la boucle considérée. Les fonctions de transfert $IX_2$, $IY_2$; $IX_{20}$, $IY_{20}$; $IX_{21}$, $IY_{21}$ des différentes boucles de contre-réaction 23, 123, 223 sont naturellement adaptées à l'amplitude et à la phase des vibrations à compenser. Dans le cas d'une fréquence de perturbation $F_R$ non synchrone à la vitesse de rotation du rotor ou au champ tournant d'un moteur, et devant être compensée par une boucle telle que la boucle 223, l'oscillateur à fréquence variable 224 doit être réglé le plus exactement possible sur la fréquence de perturbation $F_R$. La bande passante du filtre de la boucle 223 est naturellement d'autant plus grande que la fréquence est mal définie, mais doit rester étroite, afin de conserver à la boucle un gain et une efficacité élevés.

Selon un mode de réalisation possible, les fréquences de perturbation d'origine inconnue telles que la fréquence $F_R$ sont recensées périodiquement à l'aide d'un analyseur de spectre recevant les signaux fournis sur les lignes A et B par les accéléromètres 25, 26 et la fréquence de l'oscillateur à fréquence variable 224 est ajustée après chaque contrôle, ainsi que le cas échéant la fonction de transfert $IX_{21}$, $IY_{21}$ du circuit de compensation 223.

Le dispositif selon l'invention est à même de permettre des compensations des perturbations les plus diverses. Ainsi, dans le cas d'une perturbation, telle que la perturbation du balourd, le vecteur de perturbation est constant et se traduit sur deux axes perpendiculaires par un signal qui varie sinusoïdalement avec une différence de phase de 90°. Dans ce cas, une boucle de contre-réaction simple telle que la boucle 23 des figures 4 et 5 est suffisante pour compenser intégralement la perturbation.

Dans d'autres cas, les perturbations se traduisent par des vecteurs d'amplitude non constante et la figure de Lissajous des signaux selon les axes perpendiculaires x et y peut se traduire par une ellipse ou une droite. Dans ce cas, il est préférable d'utiliser pour un résolveur d'entrée $R_{11}$, deux résolveurs de sortie $R_{21}$ et $R_{22}$ correspondant l'un à une compensation selon le premier axe x, et l'autre à une compensation selon le second axe y (figure 5). Les deux résolveurs de sortie $R_{21}$, $R_{22}$ reçoivent le même signal de fréquence de référence $F_R$ à partir du circuit 224, mais les fonctions de transfert $IX_{21}$, $IY_{21}$ diffèrent pour les circuits interposés entre le résolveur d'entrée $R_{11}$ et les résolveurs de sortie $R_{21}$ et $R_{22}$. Ainsi, le premier résolveur de sortie $R_{21}$ reçoit des signaux x31 et y31 à partir des signaux $X_{21}$ et $Y_{21}$ du résolveur $R_{11}$, et délivre des signaux x21 et y21 tandis que le second résolveur de sortie $R_{22}$ reçoit des signaux x32 et y32 à partir des mêmes signaux $X_{21}$ et $Y_{21}$ du résolveur $R_{11}$ et délivre des signaux x22 et y22. Dans la mesure où l'on prélève par exemple les signaux x21 et y21 des premier et deuxième résolveur de sortie $R_{21}$, $R_{22}$ pour les appliquer aux circuits sommateurs 21 et 22, par l'ajustement des fonctions de transfert des circuits 223 et 223a comprenant les résolveurs $R_{21}$ et $R_{22}$, il est possible de traiter par la boucle 223, 223a toute perturbation dont la figure de Lissajous représente aussi bien un cercle, une ellipse qu'une droite. Les boucles de contre-réaction 23 et 123 pourraient naturellement également comprendre une partie du circuit dédoublée analogue à la partie de circuit 223a comprenant le second résolveur de sortie $R_{22}$ afin de traiter des perturbations synchrones d'amplitude variable ou de phase mal déterminée.

La figure 6 représente un exemple de spectre de fréquences obtenu par analyse harmonique à l'aide d'un analyseur de spectre à partir des signaux fournis par les accéléromètres 25, 26.

On constate que des perturbations sont présentes avec une amplitude supérieure à une valeur prédéterminée $A_0$ pour une fréquence Frot correspondant à la vitesse de rotation du rotor, des fréquences 3Frot, 5Frot, 11Frot correspondant respectivement aux 3e, 5e et 11e harmoniques de la fréquence fondamentale de rotation du rotor, une fréquence $F_E$ correspondant à la fréquence du champ tournant d'un moteur électrique d'entraînement du rotor, une fréquence $3F_E$ correspondant au triple de la fréquence $F_E$ et une fréquence de perturbation $F_R$ dont l'origine est inconnue mais qui reste stable dans le temps. Une compensation de l'ensemble des perturbations précitées Frot, 3Frot, 5Frot, 11Frot liées à la rotation du rotor et donnant lieu à des vibrations d'amplitudes supérieure au seuil $A_0$ peut alors être effectuée en mettant en service un ensemble de boucles de contre-réaction du type de la boucle 23 des figures 4 et 5. Les circuits 24 délivrant des signaux proportionnels aux fréquences Frot, 3Frot, 5Frot, 11Frot peuvent alors naturellement utiliser une génératrice tachymétrique commune ou un codeur angulaire commun fournissant une indication de la vitesse de rotation du rotor. Une compensation des perturbations $F_E$ et $eF_E$ peut de façon similaire être effectuée à partir de deux boucles de contre-réaction du type de la boucle 123 de la figure 5, avec des circuits 124 délivrant des signaux proportionnels à $F_E$ et $3F_E$ respectivement. Enfin, une compensation de la perturbation à la fréquence $F_R$ peut être effectuée avec une boucle telle que la boucle 223, 223a de la figure 5.

L'invention permet ainsi de réduire de façon drastique et même de supprimer tout un ensemble de perturbations répétitives auxquelles est soumis le bâti d'une machine tournante, par réinjection de signaux d'amplitude et de phase appropriées, dès lors que les perturbations ont pu être identifiées par analyse spectrale. L'invention se prête également à une adaptation automatique du dispositif de réduction de vibrations, dans la mesure où l'on effectue une surveillance périodique du spectre des vibrations résiduelles auxquelles est soumis le bâti lorsque le dispositif de réduction des vibrations est en service.

On notera enfin que les boucles de contre-réaction supplémentaires à insérer dans le circuit d'asservissement 100 pour réduire les vibrations du bâti peuvent facilement être réalisées à partir des techniques connues et peuvent utiliser les signaux délivrés par un seul couple d'accéléromètres.

Naturellement, chaque palier magnétique radial actif supportant le rotor d'une machine tournante peut être équipé du même système de réduction des vibrations.

## Revendications

1. Dispositif de réduction des vibrations d'une machine tournante dont le rotor est monté sur un bâti à l'aide d'une suspension magnétique active comprenant au moins un palier magnétique radial (3) muni d'enroulement d'électro-aimants (4), au moins un détecteur radial (7) de la position du rotor (1) et un circuit d'asservissement (100) relié audit détecteur (7) et auxdits enroulements (4), caractérisé en ce qu'il comprend au moins deux détecteurs de vibration (25, 26) à axes non parallèles perpendiculaires à l'axe (zz') du rotor (1) et disposés sur le bâti (2) de la machine pour détecter des perturbations auxquelles est soumis le bâti (2), et au moins une chaîne supplémentaire (23, 123, 223) de contre-réaction sélective à bande étroite et à grand gain dont la fréquence centrale est synchronisée avec une fréquence de référence (nwt, $F_E$, $F_R$) et à laquelle sont appliqués les signaux émis par lesdits détecteurs de vibration (25, 26), et en ce que la chaîne supplémentaire de contre-réaction sélective à bande étroite (23, 123, 223) comprend des moyens (27, 29) pour intégrer les signaux issus des détecteurs de vibration (25, 26), et des moyens de filtrage ($R_1$, $R_2$; $R_{10}$, $R_{20}$; $R_{11}$, $R_{21}$, $R_{22}$) pour supprimer les signaux transitoires dont la fréquence n'est pas liée à la fréquence de référence (nwt, $F_E$, $F_R$).

2. Dispositif selon la revendication 1, caractérisé en ce que les détecteurs de vibration (25, 26) sont des accéléromètres et en ce que les moyens d'intégration (27, 29) opèrent une double intégration des signaux émis par les accéléromètres.

3. Dispositif selon la revendication 1, caractérisé en ce que les détecteurs de vibration (25, 26) sont des capteurs de vitesse et en ce que les moyens d'intégration (27, 29) opèrent une simple intégration des signaux émis par les capteurs de vitesse.

4. Dispositif selon la revendication 1, caractérisé en ce que la chaîne supplémentaire de contre-réaction sélective à bande étroite (23; 123; 223) comprend un premier circuit de transformation ($R_1$; $R_{10}$; $R_{11}$) du type susceptible d'effectuer une transformation de coordonnées d'un repère fixe constitué par les axes de référence des détecteurs de vibration (25, 26) perpendiculaire entre eux et à l'axe de rotation prédéterminé (22) du rotor dans un repère tournant qui est constitué par deux axes mobiles, perpendiculaires entre eux et à l'axe de rotation (22') du rotor (1) et tournant à une vitesse liée à la dite fréquence de référence (nwt; $F_E$; $F_R$), et un second circuit de transformation ($R_2$; $R_{20}$; $R_{21}$; $R_{22}$) du type susceptible d'effectuer une transformation de coordonnées dudit repère tournant dans ledit repère fixe.

5. Dispositif selon la revendication 4, caractérisé en ce que ladite fréquence de référence (nwt) est un multiple de la vitesse de rotation du rotor et en ce qu'un circuit (24) susceptible de délivrer un signal représentatif d'un multiple de la vitesse de rotation du rotor (1), est relié auxdits premier et second circuits de transformation ($R_1$, $R_2$).

6. Dispositif selon la revendication 4, caractérisé en ce que ladite fréquence de référence ($F_E$) est une fréquence liée à la fréquence d'alimentation d'un moteur électrique asynchrone associé au rotor, et en ce qu'un circuit (124) est relié auxdits premier et second circuits de transformation ($R_{10}$, $R_{20}$) et adapté pour appliquer un signal de fréquence de référence dérivé du signal d'alimentation du moteur électrique.

7. Dispositif selon la revendication 4, caractérisé en ce que ladite fréquence de référence ($F_R$) est une fréquence stable dans le temps décelée par analyse de Fourier et indépendante de la vitesse de rotation du rotor et en ce qu'un oscillateur à fréquence ajustable (224) est relié auxdits premier et second circuits de transformation ($R_{11}$, $R_{21}$, $R_{22}$) pour appliquer un signal de référence à une fréquence la plus proche possible de ladite fréquence de référence.

8. Dispositif selon l'une quelconque des revendications 4 à 7, caractérisé en ce que les circuits de transformation de coordonnées ($R_1$, $R_2$; $R_{10}$, $R_{20}$; $R_{11}$, $R_{21}$, $R_{22}$) sont de type analogique et comprennent chacun un générateur sinus/cosinus et un résolveur statique constitué à base de multiplieurs analogiques.

9. Dispositif selon la revendication 8, caractérisé en ce que la chaîne supplémentaire de contre-réaction sélective à bande étroite (223) comprend un premier circuit de transformation ($R_{11}$) comprenant un résolveur d'entrée unique et un second circuit de transformation incluant une première fonction de transfert ($IX_{21}$, $IY_{21}$) et un premier résolveur de sortie ($R_{21}$) correspondant à l'un des axes (x) dudit repère fixe, et une seconde fonction de transfert ($IX'_{21}$, $IY'_{21}$) et un second résolveur de sortie ($R_{22}$) correspondant à l'autre axe (y) dudit repère fixe.

10. Dispositif selon l'une quelconque des revendications 4 à 9, caractérisé en ce que les circuits de transformation de coordonnées ($R_1$, $R_2$; $R_{10}$, $R_{20}$; $R_{11}$, $R_{21}$, $R_{22}$), sont constitués par des circuits numériques.

11. Procédé de réduction des vibrations d'une machine tournante dont le rotor est monté sur un bâti à l'aide d'une suspension magnétique active comprenant au moins un palier magnétique radial (3) muni d'enroulements d'électro-aimants (4), au moins un détecteur radial (7) de la position du rotor (1) et un circuit d'asservissement (100) relié audit détecteur (7) et auxdits enroulements (4), caractérisé en ce que l'on dispose sur le bâti (2) de la machine tournante au moins deux détecteurs de vibrations (25, 26) à axes non parallèles perpendiculaires à l'axe zz' du rotor (1), en ce que l'on procède, à l'aide d'un analyseur de spectre à partir des signaux fournis par les détecteurs de vibration, au recensement des fréquences de vibration (Frot, 3Frot, 5Frot, 11Frot, $F_E$, $3F_E$, $F_R$) correspondant à des perturbations répétitives stables dans le temps, en ce que l'on identifie les fréquences de vibration (Frot, 3Frot, 5Frot, 11Frot) correspondant à un multiple de la vitesse de rotation du rotor, les fréquences de vibration ($F_E$, $3F_E$) correspondant à un multiple d'une fréquence caractéristique connue telle que la fréquence d'alimentation d'un moteur asynchrone et les fréquences de vibration ($F_R$) stables dans le temps mais non synchrones à une fréquence caractéristique connue d'un organe de machine, en ce que l'on introduit dans le circuit d'asservissement (100), pour compenser les vibrations répétitives correspondant aux fréquences de vibration recensées, des boucles supplémentaires (23, 123, 223) de contre-réaction sélective à bande étroite et à grand gain dont les fréquences centrales sont synchronisées respectivement avec les différentes fréquences de vibration recensées (Frot, 3Frot, 5Frot, 11Frot, $F_E$, $3F_E$, $F_R$) en ce que l'on applique, les signaux émis par lesdits détecteurs de vibration (25, 26), après intégration, aux différentes boucles supplémentaires (23, 123, 223) de contre-réaction et en ce que l'on procède à l'intérieur de chaque boucle de contre-réaction supplémentaire (23; 123; 223) à un filtrage des signaux transitoires dont la fréquence n'est pas liée à la fréquence de vibration recensée devant être compensée par ladite boucle.

12. Procédé selon la revendication 11, caractérisé en ce que l'on détermine d'abord dans une première étape, à l'aide d'un analyseur de spectre, de premières fréquences de vibration correspondant à des multiples de la vitesse de rotation du rotor ou le cas échéant à des multiples d'une fréquence caractéristique connue, et on introduit dans le circuit d'asservissement des premières boucles supplémentaires (23, 123) de contre-réaction sélective à bande étroite et à grand gain dont les fréquences centrales sont synchronisées respectivement avec les différentes premières fréquences de vibration recensées pendant la première étape, à partir de signaux fournis par un capteur de vitesse de rotation du rotor ou par un capteur du signal de fréquence caractéristique connue, puis, dans une deuxième étape, les premières boucles supplémentaires de contre-réaction (23, 123) étant en service, on détermine, à l'aide de l'analyseur de spectre, de secondes fréquences de vibration ($F_R$) stables dans le temps non synchrones à une fréquence caractéristique connue d'un organe de machine, et on introduit dans le circuit d'asservissement de secondes boucles supplémentaires (223) de contre-réaction sélective à bande étroite et à grand gain dont les fréquences centrales sont synchronisées respectivement avec les différentes secondes fréquences de vibration recensées pendant la deuxième étape, à partir d'oscillateurs à fréquence ajustable dont les fréquences sont ajustées sur lesdites secondes fréquences de vibration recensées.

13. Procédé selon la revendication 12, caractérisé en ce que l'on effectue périodiquement à l'aide de l'analyseur de spectre, un contrôle des fréquences des vibrations stables dans le temps non synchrones à une fréquence caractéristique connue d'un organe de machine et en ce que l'on réajuste après chaque contrôle les fréquences des oscillateurs à fréquence ajustable en fonction des valeurs actualisées des secondes fréquences de vibration recensées.

14. Procédé selon l'une quelconque des revendications 11 à 13, caractérisé en ce que lors du recensement des fréquences de vibration, on ne tient pas compte des fréquences correspondant à des vibrations d'amplitude inférieure à un seuil prédéterminé.

**Patentansprüche**

1. Vorrichtung zur Verminderung der Vibrationen einer sich drehenden Maschine, deren Rotor auf einem Gestell mit Hilfe einer aktiven, magnetischen Aufhängung angebracht ist, die mindestens ein magnetisches Radiallager (3) mit Magnetwicklungen (4), mindestens einen Radialdetektor (7) der Stellung des Rotors (1) und einen mit dem Detektor (7) und den Magnetwicklungen (4) verbundenen Regelkreis (100) umfasst, gekennzeichnet durch

— mindestens zwei Vibrationsdetektoren (25, 26) mit nicht parallelen, zur Achse (zz') des Rotors (1) senkrechten Achsen, die auf dem Gestell (2) der Maschine angeordnet sind und dem Nachweis von auf das Gestell (2) wirkenden Störungen dienen,

— mindestens einer zusätzlich selektiven Gegenkopplungskette (23, 123, 223) mit schmalem Band und grosser Verstärkung, deren Bandmittenfrequenz mit einer Bezugsfrequenz (nwt, $F_E$, $F_R$) synchron ist, in die die von den Vibrationsdetektoren (25, 26) ausgesandten Signale eingegeben werden und die Vorrichtungen (27, 29) zur Integration der von den Vibrationsdetektoren (25, 26) ausgesandten Signale und Filtervorrichtungen ($R_1$, $R_2$; $R_{10}$, $R_{20}$; $R_{11}$, $R_{21}$, $R_{22}$) zur Unterdrückung der Übergangssignale umfasst, deren Frequenz nicht an die Bezugsfrequenz (nwt, $F_E$, $F_R$) gebunden ist.

2. Vorrichtung nach Anspruch 1, dadurch gekennzeichnet, dass die Vibrationsdetektoren (25, 26) Beschleunigungsmesser und die Integrationsvorrichtungen (27, 29) eine doppelte Integration der durch die Beschleunigungsmesser ausgegebenen Signale durchführen.

3. Vorrichtung nach Anspruch 1, dadurch gekennzeichnet, dass die Vibrationsdetektoren (25, 26) Geschwindigkeitsmesser sind und die Integrationsvorrichtungen (27, 29) eine einfache Integration der von den Geschwindigkeitsmessern ausgegebenen Signale durchführen.

4. Vorrichtung nach Anspruch 1, dadurch gekennzeichnet, dass die zusätzliche selektive Gegenkopplungskette mit schmalem Band (23, 123, 223) einen ersten Wandlerkreis ($R_1$; $R_{10}$; $R_{11}$) zur Umwandlung der Koordinaten eines festen Bezugssystems, das aus den Bezugsachsen der Vibrationsdetektoren (25, 26) besteht, die zueinander und zur vorbestimmten Drehachse (22) des Rotors senkrecht sind, in ein sich drehendes Bezugssystem, das aus zwei beweglichen Achsen besteht, die zueinander und zur Drehachse (22') des Rotors (1) senkrecht sind, und sich mit einer an die Bezugsfrequenz (nwt; $F_E$; $F_R$) gebundenen Geschwindigkeit dreht, und einen zweiten Wandlerkreis ($R_2$; $R_{20}$; $R_{21}$; $R_{22}$) zur Umwandlung der Koordinaten des sich drehenden Bezugssystems in das feste Bezugssystem umfasst.

5. Vorrichtung nach Anspruch 4, dadurch gekennzeichnet, dass die Bezugsfrequenz (nwt) ein Vielfaches der Drehgeschwindigkeit des Rotors ist und ein Kreis (24), der ein für ein Vielfaches der Drehgeschwindigkeit des Rotors (1) typisches Signal abgeben kann, mit dem ersten und dem zweiten Wandlerkreis ($R_1$, $R_2$) verbunden ist.

6. Vorrichtung nach Anspruch 4, dadurch gekennzeichnet, dass die Bezugsfrequenz ($F_E$) an die Eingangsfrequenz eines asynchronen, dem Rotor ähnlichen elektrischen Motors gebunden ist und ein Kreis (124) mit dem ersten und dem zweiten Wandlerkreis ($R_{10}$, $R_{20}$) verbunden und so angepasst ist, dass er ein vom Eingangssignal des elektrischen Motors abgeleitetes Bezugsfrequenzsignal eingibt.

7. Vorrichtung nach Anspruch 4, dadurch gekennzeichnet, dass die Bezugsfrequenz ($F_R$) zeitlich stabil (nachgewiesen durch Fourier-Analyse) und von der Drehgeschwindigkeit des Rotors unabhängig ist und ein Oszillator mit regelbarer Frequenz (224) mit dem ersten und dem zweiten Wandlerkreis ($R_{11}$, $R_{21}$, $R_{22}$) zur Eingabe eines Bezugssignals an die Frequenz, die der Bezugsfrequenz am nächsten kommt, verbunden ist.

8. Vorrichtung nach einem der Ansprüche 4 bis 7, dadurch gekennzeichnet, dass die Koordinatenwandlerkreise ($R_1$, $R_2$; $R_{10}$, $R_{20}$; $R_{11}$, $R_{21}$, $R_{22}$) analog sind und je einen Sinus-Cosinus-Generator und einen statischen Koordinatenwandler auf der Basis analoger Vervielfältiger umfassen.

9. Vorrichtung nach Anspruch 8, dadurch gekennzeichnet, dass die zusätzliche selektive Gegenkopplungskette mit schmalem Band (223) einen ersten Wandlerkreis ($R_{11}$) mit einem einzigen Eingangskoordinatenwandler und einen zweiten Wandlerkreis mit einer ersten Übertragungsfunktion ($IX_{21}$, $IY_{21}$) und einem ersten Ausgangskoordinatenwandler ($R_{21}$), der einer der Achsen (x) des festen Bezugssystems entspricht, und eine zweite Übertragungsfunktion ($IX'_{21}$, $IY'_{21}$) und einem zweiten Ausgangskoordinatenwandler ($R_{22}$), der der anderen Achse (y) des festen Bezugssystems entspricht, umfasst.

10. Vorrichtung nach einem der Ansprüche 4 bis 9, dadurch gekennzeichnet, dass die Koordinatenwandlerkreise ($R_1$, $R_2$; $R_{10}$, $R_{20}$; $R_{11}$, $R_{21}$, $R_{22}$) aus numerischen Kreisen bestehen.

11. Verfahren zur Verminderung der Vibrationen einer sich drehenden Maschine, deren Rotor auf einem Gestell mit Hilfe einer aktiven magnetischen Aufhängung angebracht ist, die mindestens ein magnetisches Radiallager (3) mit Magnetwicklungen (4), mindestens einen Radialdetektor (7) der Stellung des Rotors (1) und einen mit dem Detektor (7) und den Magnetwicklungen (4) verbundenen Regelkreis (100) umfasst, dadurch gekennzeichnet, dass auf dem Gestell (2) der sich drehenden Maschine mindestens zwei Vibrationsdetektoren (25, 26) mit nicht parallelen, zur Achse (zz') des Rotors (1) senkrechten Achsen angebracht werden, die Vibrationsfrequenzen (Frot, 3Frot, 5Frot, 11Frot, $F_E$, $3F_E$, $F_R$), die zeitlich stabilen, sich wiederholenden Störungen entsprechen, mit einem Spektralanalysator anhand der von den Vibrationsdetektoren ausgegebenen Signalen aufgenommen werden, die Vibrationsfrequenzen (Frot, 3Frot, 5Frot, 11Frot), die einem Vielfachen der Drehgeschwindigkeit des Rotors entsprechen, die Vibrationsfrequenzen ($F_E$, $3F_E$), die einem Vielfachen einer charakteristischen bekannten Frequenz, wie der Eingangsfrequenz eines asynchronen Motors, entsprechen, und die Vibrationsfrequenzen ($F_R$), die zeitlich stabil jedoch mit der charakteristischen bekannten Frequenz eines Maschinenteils nicht synchron sind, identifiziert werden, in den Regelkreis (100) zur Kompensation der sich wiederholenden, der aufgenommenen Vibrationsfrequenzen entsprechenden Vibrationen zusätzliche selektive Gegenkopplungsschleifen (23, 123, 223) mit schmalem Band und grosser Verstärkung eingeführt werden, deren Bandmittenfrequenzen mit den verschiedenen aufgenommenen Vibrationsfrequenzen (Frot, 3Frot, 5Frot, 11Frot, $F_E$, $3F_E$, $F_R$) synchron sind, die von den Vibrationsdetektoren (25, 26) ausgegebenen Signale nach Integration in die verschiedenen zusätzlichen Gegenkopplungsschleifen (23, 123, 223) eingegeben werden und in jeder zusätzlichen Gegenkopplungsschleife (23, 123, 223) die Übergangssignale filtriert werden, deren Frequenz nicht an die aufgenommene, durch die Schleife zu kompensierende Bezugsfrequenz gebunden ist.

12. Verfahren nach Anspruch 11, dadurch gekennzeichnet, dass in einer ersten Stufe mit einem Spektralanaylsator erste Vibrationsfrequenzen, die Vielfachen der Drehgeschwindigkeit des Rotors oder ggf. Vielfachen einer charakteristischen bekannten Frequenz entsprechen, aufgenommen werden, in den Regelkreis erste zusätzliche selektive Gegenkopplungsschleifen (23, 123) mit schmalem Band und grosser Verstärkung eingeführt werden, deren Bandmittenfrequenzen mit den verschiedenen ersten, während der ersten Stufe aufgenommenen Vibrationsfrequenzen synchron sind, wobei von den Signalen ausgegangen wird, die von einem Geschwindigkeitsmesser der Drehgeschwindigkeit des Rotors oder einem Aufnehmer des Signals der charakteristischen bekannten Frequenz ausgegeben werden, und dann in einer zweiten Stufe mit den ersten zusätzlichen Gegenkopplungsschleifen (23, 123) in Betrieb mit Hilfe des Spektralanalysators zweite Vibrationsfrequenzen ($F_R$), die zeitlich stabil und mit einer bekannten charakteristischen Frequenz eines Maschinenteils nicht synchron sind, bestimmt werden, in den Regelkreis zweite zusätzliche selektive Gegenkopplungsschleifen (223) mit schmalem Band und grosser Verstärkung eingeführt werden, deren Bandmittenfrequenzen mit den verschiedenen zweiten, während der zweiten Stufe aufgenommenen Vibrationsfrequenzen synchron sind, wobei von Oszillatoren mit regelbarer Frequenz ausgegangen wird, deren Frequenzen auf diese zweiten aufgenommenen Vibrationsfrequenzen eingestellt werden.

13. Verfahren nach Anspruch 12, dadurch gekennzeichnet, dass mit dem Spektralanalysator periodisch die zeitlich stabilen Vibrationsfrequenzen, die mit einer bekannten charakteristischen Frequenz eines Maschinenteils nicht synchron sind, kontrolliert werden und nach jeder Kontrolle die Frequenzen der Oszillatoren mit regelbarer Frequenz in Abhängigkeit von den aktualisierten Werten der aufgenommenen zweiten Vibrationsfrequenzen nachgestellt werden.

14. Verfahren nach einem der Ansprüche 11 bis 13, dadurch gekennzeichnet, dass bei der Aufnahme der Vibrationsfrequenzen die Frequenzen, die Vibrationen mit einer geringeren Amplitude als einem vorbestimmten Schwellen entsprechen, nicht berücksichtigt werden.

## Claims

1. Device for reducing the vibrations of a rotating machine having a rotor mounted on a frame by way of an active magnetic suspension comprising at least one radial magnetic bearing (3) equipped with electromagnetic coils (4), at least one radial detector (7) for detecting the position of the rotor (1) and a servo-control circuit (100) connected to said detector (7) and said coils (4), characterized in that it comprises at least two vibration detectors (25, 26) having non-parallel axes which are perpendicular to the rotor (1) axis (zz') placed on the frame (2) of the machine for detecting the disturbances to which the frame (2) is subjected, and at least an additional selective feedback loop (23, 123, 223) with narrow band and high gain, the central frequency of which is synchronized with a reference frequency (nwt, $F_E$, $F_R$) and to which are applied the signals produced by said vibration detectors (25, 26), and in that the additional selective feedback loop (23, 123, 223) with narrow band comprises means (27, 29) for integrating the signals issued from the vibration detectors (25, 26) and filtering means ($R_1$, $R_2$; $R_{10}$, $R_{20}$; $R_{11}$, $R_{21}$, $R_{22}$) for removing the transient signals, the frequency of which is not linked to the reference frequency (nwt, $F_E$, $F_R$).

2. Device according to claim 1, characterized in that the vibration detectors (25, 26) are accelerometers and in that the integration means (27, 29) operate to provide a double integration of the signals produced by the accelerometers.

3. Device according to claim 1, characterized in that the vibration detectors (25, 26) are speed sensors and in that the integration means (27, 29) operate to provide a simple integration of the signals produced by the speed sensors.

4. Device according to claim 1, characterized in that the additional selective feedback loop with narrow band (23; 123; 223) comprises a first conversion circuit ($R_1$; $R_{10}$; $R_{11}$) of the type capable of converting coordinates from a fixed coordinate system constituted by the reference axes of the vibration detectors (25, 26), which axes are perpendicular to one another and to the predetermined rotation axis (22) of the rotor into a rotating coordinate system which is constituted by two movable axes, perpendicular to one another and to the rotation axis (22') of the rotor (1) and rotating at a speed linked to the reference frequency (nwt; $F_E$; $F_R$) and a second conversion circuit ($R_2$; $R_{20}$; $R_{21}$; $R_{22}$) of the type capable of converting coordinates from said rotary coordinate system into said fixed coordinate system.

5. Device according to claim 4, characterized in that said reference frequency (nwt) is a multiple of the rotation speed of the rotor, and in that a circuit means (24) for delivering a signal representing a multiple of the rotation speed of the rotor (1) is connected to said first and second conversion circuits ($R_1$, $R_2$).

6. Device according to claim 4, characterized in that said reference frequency ($F_E$) is a frequency which is linked to the power supply frequency of an asynchronous electric motor operationally coupled to the rotor, and in that a circuit means (124) is connected to said first and second conversion circuits ($R_{10}$, $R_{20}$) and capable of delivering a signal of reference frequency derived from the power supply of the electric motor.

7. Device according to claim 4, characterized in that said reference frequency ($F_R$) is a stable-in-time frequency detected by Fourier analysis and independent of the speed of rotation of the rotor, and in that an oscillator (224) of adjustable frequency is connected to said first and second conversion circuits ($R_{11}$, $R_{21}$, $R_{22}$) to generate a reference signal having a frequency which is substantially equal to said reference frequency.

8. Device according to any one of claims 4 to 7, characterized in that said coordinate conversion circuits ($R_1$, $R_2$; $R_{10}$, $R_{20}$; $R_{11}$, $R_{21}$, $R_{22}$) are of analog type, each one comprising a sine-cosine generator and a static resolver constituted from analog multiplying devices.

9. Device according to claim 8, characterized in that the additional selective feedback loop with narrow band (223) comprises a first conversion circuit ($R_{11}$) with a single input resolver and a second conversion circuit including a first transfer function ($IX_{21}$, $IY_{21}$) and a first output resolver ($R_{21}$) corresponding to one of the axes (x) of said fixed coordinate system and a second tranfer function ($IX'_{21}$, $IY'_{21}$) with a second output resolver ($R_{22}$) corresponding to the other axis (y) of said fixed coordinate system.

10. Device according to any one of claims 4 to 9, characterized in that said coordinate conversion circuits ($R_1$, $R_2$; $R_{10}$, $R_{20}$; $R_{11}$, $R_{21}$, $R_{22}$) are constituted by digital circuit.

11. Process for reducing the vibrations of a rotating machine having a rotor mounted on a frame by way of an active magnetic suspension of the type comprising at least one radial magnetic bearing (3) equipped with electro-magnetic coils (4), at least one radial detector (7) for detecting the position of the rotor (1) and one servo-control circuit (100) connected to said detector (7) and to said coils (4), characterized in that it consists in fixing two vibration detectors (25, 26) having non-parallel axes which are perpendicular to the axis zz' of the rotor (1) on the frame (2) of the rotating machine, and in that it consists in recording by means of a spectrum analyzer, from the signals issued from the vibration detectors, the vibration frequencies (Frot, 3Frot, 5Frot, 11Frot, $F_E$, 3$F_E$, $F_R$) corresponding to repetitive and stable in time disturbances, in identifying the vibration frequencies (Frot, 3Frot, 5Frot, 11Frot) corresponding to a multiple of the rotation speed of the rotor, the vibration frequencies ($F_E$, 3$F_E$) corresponding to a multiple of a known characteristic frequency such as the power supply frequency of an asynchronous motor and the vibration frequencies ($F_R$) which are stable in time, but non synchronous to a known characteristic frequency of a machine member, in introducing in the servo-control circuit (100), in order to compensate for the repetitive vibrations corresponding to the identified vibration frequencies, additional selective feedback loops (23, 123, 223) with narrow band and high gain, the central frequencies of which are synchronized with the identified vibration frequencies (Frot, 3Frot, 5Frot, 11Frot, $F_E$, 3$F_E$, $F_R$) respectively, in applying the singnals produced by said vibration detectors (25, 26), after integration, to the different additional feedback loops (23, 123, 223), and in filtering, inside each additional feedback loop (23; 123; 223), the transient signals whose frequency is not related to the identified vibration frequency to be compensated by said loop.

12. Process according to claim 11, characterized in that a first step consists in first determining, with a spectrum analyzer, first vibration frequencies which correspond to multiples of the rotor rotation speed or if necessary to multiples of a known characteristic frequency, and in introducing into the servo-control circuit additional selective feedback loops (23, 123) with narrow band and high gain, the central frequencies of which are respectively synchronized with the different first vibration frequencies recorded during the first step, from signals delivered by a sensor of the rotation speed of the rotor or by a sensor of the signal of known characteristic frequency, and, a sesond step consists in determining with the spectrum analyzer, while the first additional feedback loops (23, 123) are in use, second vibration frequencies ($F_R$) which are stable in time and non-synchronous to a known characteristic frequency of a machine member, and in introducing into the servo-control circuit, second additional selective feedback loops (223) with narrow band and high gain, the central frequencies of which are respectively synchronized with the different second vibration frequencies identified during the second step, from oscillators of adjustable frequency, the frequencies of which are adjusted on said second identified vibration frequencies.

13. Process according to claim 12, characterized in that a control of the vibration frequencies which are stable in time and non-synchronous to a known characteristic frequency of a machine member is effected periodically with a spectrum analyzer, and after each control, the frequencies of the oscillators of adjustable frequency are readjusted as a function of the new values of the second identified vibration frequencies.

14. Process according to any one of claims 11 to 13, characterized in that when recording and identifying the vibration frequencies, no account is taken of the frequencies corresponding to vibrations of amplitude below a predetermined threshold.

Fig. 1

Fig. 2

Fig. 3

0 157 693

Fig-4

0 157 693

Fig. 5

Fig. 6

17